(19) Europäisches Patentamt
European Patent Office
Office européen des brevets

(11) Publication number: 0 192 529
B1

(12) **EUROPEAN PATENT SPECIFICATION**

(45) Date of publication of patent specification: 09.11.88

(51) Int. Cl.$^4$: C 08 F 38/02

(21) Application number: 86400176.3

(22) Date of filing: 29.01.86

(54) **Process for the preparation of polyacetylene.**

(30) Priority: 30.01.85 IT 1930685

(43) Date of publication of application:
27.08.86 Bulletin 86/35

(45) Publication of the grant of the patent:
09.11.88 Bulletin 88/45

(84) Designated Contracting States:
BE DE FR GB NL

(58) References cited:
EP-A-0 045 905

(73) Proprietor: Montedison S.p.A.
31, Foro Buonaparte
I-20121 Milan (IT)

(72) Inventor: Albizatti, Enrico
45 Via F. Baracca
I-28041 Arona Novara (IT)
Inventor: Petrera, Michele
11 Via Ruzzante
I-28100 Novara (IT)
Inventor: Giunchi, Giovanni
15 Via Don Gallotti
I-28100 Novara (IT)

(74) Representative: Hirsch, Marc-Roger
Cabinet Hirsch 34 rue de Bassano
F-75008 Paris (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 192 529 B1

**Description**

The present invention concerns a polyacetylene compound with high density and resistance to oxidation, as well as the process for its preparation.

It is already known to prepare acetylene polymers by using a catalytic system consisting of a mixture of a transition metal and of an organometal compound of the elements belonging to groups IA, IIA and IIIA of the Periodic System.

A preparation of this type was described for the first time by G. NATTA et al. in "Rend. Acc. Naz. Lincei, Science Fis. Mat. Nat.: 25, 3 (1958)", according to which crystalline acetylene polymers are obtained in the form of a powder by using catalysts based on titanium and aluminum trialkyl alcoholates.

More particularly, is known a process for obtaining the polyacetylene compound directly during polymerization in the form of a film (T. Iyo, H. Shirakawa & S. Ikeda, J. Polym. Sci. Polym. Chem., Ed. 13, 11 (1974).

This method is generally preferred even if it does not allow the obtention of films presenting good mechanical properties.

In published Italian Patent Appl. No. 22722 A/82 new polyacetylene films presenting particular characteristics are described, such as the elongation at rupture, the breaking load and the molecular orientation under stretch. Such films are prepared by using as catalysts special titanium compounds, mainly dialkoxy-dicresoxy titanium in combination with aluminum trialkyls. The values of bulk density of the polyacetylene prepared according to the known methods of the prior art are generally comprised between 0.4 and 0.5 g/cm$^3$, with surface area values greater than 70 m$^2$/g.

One particular drawback of the polyacetylenes obtained by known methods is constituted by their instability to oxidation, which considerably reduces the possibility of their being used, for instance, in the manufacture of electrodes for primary and secondary batteries.

It has now surprisingly been found by the present Applicant that it is possible to obtain a polyacetylene presenting improved characteristics, especially with respect to the stability to oxidation, by simply carrying out the polymerization of the acetylene in the presence of a catalytic system consisting of:

(1) an oxygenized titanium or vanadium compound containing at least one metal-oxygen bond;

(2) an organometal aluminum compound containing at least one heteroatom, having the formula:

$$\begin{matrix}R\\R'\end{matrix}\!>Al-M-Al<\!\begin{matrix}R\\R'\end{matrix}$$

wherein:

$$M \text{ is } >O,\ >S,\ >N-R,\ >P-R,\ -O-\underset{\underset{O}{\|}}{\overset{\overset{O}{\|}}{S}}-O-,\ -O-\overset{\overset{O}{\|}}{S}-O-;$$

R may be a hydrocarbon radical with 1-18 carbon atoms;

R′ may be equal to R or may be a halogen or an alkoxyl.

Preferably, the molar ratio between component (2) and component (1) is comprised between 10 and l.

Examples of preferred components of point (1) are:

$Ti(OC_2H_5)_4$; $Ti(O-n.C_4H_9)_4$; $Ti(O-i.C_3H_7)_4$; $Ti(OC_6H_5)_4$; $VO(OC_2H_5)_3$; $V(O-i.C_3H_7)_4$; $VO(O-i.C_3H_7)_3$; V-triacetylacetonate.

Examples of preferred components (2) are:

$(C_2H_5)_2Al-O-Al(C_2H_5)_2$; $(iC_4H_9)_2Al-O-Al(iC_4H_9)_2$;

$(C_2H_5)_2Al-\underset{\underset{C_4H_9}{|}}{N}-(C_2H_5)_2$; $(C_2H_5)_2Al-\underset{\underset{C_6H_5}{|}}{N}-Al(C_2H_5)_2$

$(n-C_6H_{13})_2Al-O-Al(n-C_6H_{13})_2$; $(iC_4H_9)_2Al-S-Al(iC_4H_9)_2$

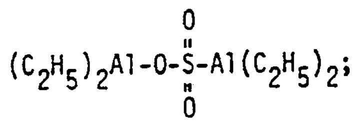;

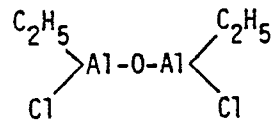

The polymerization of the acetylene with the above-cited catalytic system is carried out under temperatures varying from −100°C to +100°C, but which are preferably comprised between −80° and +30°C, and under monomer pressures comprised between 0,0098 and 1,96 bar.

The polyacetylene thus obtained is generally present in the form of films of a thickness comprised between 5µm and 1 mm. At 20°C this polyacetylene shows bulk density values greater than 0.6 g/cm$^3$, and surface area values lower than 60 m$^2$/g. The percentage of polymer in the cis-fonm is greater than 90%, when polymerizing the monomer at a temperature of −78°C.

One of the objects of the present invention is thus to provide a polyacetylene presenting a bulk density greater than 0.6 g/cm$^3$ and having a surface area lower than 60 m$^2$/g.

A further object of this invention is to provide a process for the preparation of polyacetylene, said process consisting in polymerizing acetylene in a gaseous state in the presence of the above-defined catalytic system.

The process according to the present invention is suitable for the preparation of polyacetylene both in the form of a film as well as in the form of either a powder or a gel or in spongy form.

The following examples are given in order to further illustrate the inventive idea of the present invention.

Example 1-5

Into a test tube of 250 ml holding capacity, and under a nitrogen atmosphere, were introduced in the following order 3 m.Mols of $Ti(OC_4H_9)_4$ and 12 m.Mols of aluminum compounds in a 0.5 M heptanic solution. In example 1, given for comparative purposes, triethylaluminum, which is a co-catalyst usually employed in the prior art was used. In examples 2-5 aluminum compounds containing a hetero-atom have been used, as indicated in the invention.

The above said solution was allowed to age for 1 (one) hour at 25°C, whereupon the solvent was evaporated under vacuum until a titanium concentration of 0.4 M/l was obtained. The test tube was then cooled, while keeping the same under vacuum, to −78°C, and thereafter its walls were homogeneously coated with the catalyst. Into the test tube acetylene was then introduced, under a pressure of 750 mm/Hg, thereby causing the immediate formation of the polymer.

After 1 hour, the polymerization was interrupted by discharging the acetylene and replacing it with nitrogen. The film obtained presenting a metallic aspect, was then repeatedly and successively washed with n-heptane at −78°C and with pentane, both previously cooled.

The film was thereupon dried under vacuum at the same temperature. The catalysts used for this purpose and the characterization of the obtained polymers have been recorded in the following table.

The surface area of the polyacetylenes has been determined according to the BET method; the percentage of cis-isomer has been determined according to the method described in Makromol. Chemistry-5, 311 (1984).

TABLE

| Example No. | Co-catalyst | Apparent density (g/cm$^3$) | % cis isomer | Surface aera (m$^2$/g) |
|---|---|---|---|---|
| 1 comparative | $Al(C_2H_5)_3$ | 0.44 | 90 | 90.6 |
| 2 | $[(iC_4H_9)_2Al]_2O$ | 0.80 | > 90 | 56.2 |
| 3 | $[(n.C_6H_{13})_2Al]_2O$ | 0.75 | > 90 | 49.0 |
| 4 | $[(C_2H_5)_2Al]_2N(C_4H_9)$ | 0,90 | > 90 | 54.8 |
| 5 | $[(iC_4H_9)_2Al]_2N(C_6H_5)$ | 0.83 | > 90 | 47.6 |

## Claims

1. A polyacetylene with a bulk density greater than O-6 g/cm$^3$ With a surface area lower than 60 m$^2$/g.

2. A polyacetylene according to claim 1, characterized in that it has a bulk density comprised between O.75 and O.90 g/cm$^3$.

3. A polyacetylene according to the previous claims 1 and 2, characterized in that it has a cis-isomer content greater than 90%.

4. A process for the preparation of polyacetylene as defined in claim 1 consisting in polymerizing gaseous acetylene in the presence of a catalytic system consisting of:

(1) an oxygenized titanium or vanadium compound containing at least one metal-oxygen bond;

(2) an organometal aluminum compound containing at least one heteroatom and having the formula:

$$\begin{matrix} R & & R \\ & >Al - M - Al< & \\ R' & & R' \end{matrix}$$

wherein:

$$M \text{ is } >O,\ >S,\ >N\text{-}R,\ >P\text{-}R,\ \text{-}O\text{-}\underset{\underset{O}{\|}}{\overset{\overset{O}{\|}}{S}}\text{-}O\text{-},\ \text{-}O\text{-}\overset{\overset{O}{\|}}{S}\text{-}O\text{-};$$

R may be a hydrocarbon radical having 1-18 carbon atoms;

R′ may be equal to R or may be a halogen or an alkoxyl.

5. A process according to claim 4, characterized in that in said process the polymerization is carried out at a temperature of −78°C.

6. A process according to claims 4 and 5, characterized in that the polyacetylene is obtained in the form of a film having a thickness comprised between 5 µm and 1 mm.

## Patentansprüche

1. Ein Polyazetylen mit einer Schüttdichte von weniger als O,6 g/cm$^2$ und einer spezifischen Oberfläche von weniger als 60 m$^2$/g ist,

2. Ein Polyazetylen nach Anspruch 1, dadurch gekennzeichnet, dass es eine Schüttdichte von O,75 bis O,90 g/cm$^3$ besitzt,

3. Ein Polyazetylen nach den Ansprüchen 1 und 2, dadurch gekennzeichnet, dass es einen Cis-Isomer-Gehalt von mehr als 90% aufweist,

4. Ein Verfahren zur Herstellung eines polyazetylens nach Anspruch 1, bei dem ein gasförmiges Azetylen in Anwesenheit eines Katalysatorsystems polymerisiert wird, welches umfasst:

(1) eine sauerstoffhaltige Titanium- oder Vanadiumverbindung mit wenigstens einer Metall-Sauerstoffbindung;

(2) eine organometallische Aluminiumverbindung mit wenigstens einem Heteroatom, die folgender Formel entspricht:

$$\begin{matrix} R & & R \\ & >Al - M - Al< & \\ R' & & R' \end{matrix}$$

wobei:

$$M \text{ ist } >O,\ >S,\ >N\text{-}R,\ >P\text{-}R,\ \text{-}O\text{-}\underset{\underset{O}{\|}}{\overset{\overset{O}{\|}}{S}}\text{-}O\text{-},\ \text{-}O\text{-}\overset{\overset{O}{\|}}{S}\text{-}O\text{-};$$

R eine 1 bis 18 Kohlenstoffatome umfassende Kohlenwasserstoffverbindung sein kann; und

R′ gleich R oder ein Halogen oder ein Alkoxyl sein kann.

5. Ein Verfahren nach Anspruch 4, dadurch gekennzeichnet, dass die Polymerisation bei dem genannten Verfahren bei einer Temperatur von -78°C durchgeführt wird.

6. Ein Verfahren nach Anspruch 4 und 5, dadurch gekennzeichnet, dass das Polyazetylen in Form eines Films von einer Dicke von 5 um bis 1 mm erzeugt wird.

**Revendications**

1. Un polyacétylène présentant une densité apparente supérieure à O,6 g/cm$^3$ et une surface spécifique inférieure à 60 m$^2$/g.

2. Un polyacétylène selon la revendication 1, caractérisé en ce qu'il présente une densité apparente comprise entre O,75 et O,90 g/cm$^3$,

3. Un polyacétylène selon les revendications 1 ou 2 précitées, caractérisé en ce qu'il présente une teneur en isomère-cis supérieure à 90%.

4. Un procédé pour la préparation de polyacétylène tel que défini dans la revendication 1, consistant à polymériser de l'acétylène gazeux en présence d'un système catalytique formé de:

a) un composé oxygéné à base de titane ou de vanadium contenant au moins une liaison métal-oxygène;

b) un composé organo-aluminium contenant au moins un hétéroatome et présentant la formule:

$$\begin{matrix} R & & R \\ & >Al - M - Al< & \\ R' & & R' \end{matrix}$$

dans laquelle:

$$M \text{ est } >O,\ >S,\ >N-R,\ >P-R,\ -O-\overset{\overset{O}{\|}}{\underset{\underset{O}{\|}}{S}}-O-,\ -O-\overset{\overset{O}{\|}}{S}-O-;$$

R peut être un radical hydrocarboné comprenant 1 à 18 atomes de carbone,

R' peut être semblable à R ou être un halogène ou un radical alkoxyle,

5. Un procédé selon la revendication 4, caractérisé en ce que dans ledit procédé la polymérisation est mise en oeuvre à une température de -78°C.

6. Un procédé selon la revendication 4 et 5, caractérisé en ce que le polyacétylène est obtenu sous la forme d'une pellicule ayant une épaisseur comprise entre 5 um et 1 mm.